# EUROPÄISCHE PATENTANMELDUNG

(11) **EP 1 467 546 A1**
(43) Veröffentlichungstag der Anmeldung: **13.10.2004**
(21) Anmeldenummer: 04008698.5
(22) Anmeldetag: 08.04.2004
(51) Int. Cl.: H04M 3/54, H04M 3/42

(54) **Endgerät, Vermittlungseinrichtung, Mobilfunkeinheit und Verfahren zum Weiterleiten eines Anrufes in einem Telekommunikationsnetz**

(30) Priorität: 09.04.2003 DE 10316160
(71) Anmelder: Tenovis GmbH & Co. KG, 60326 Frankfurt am Main (DE)
(72) Erfinder: Rodewald, Frank, 50181 Bedburg (DE)
(74) Vertreter: Habenicht, Wieland, Dr.

(57) **Zusammenfassung**

Die Erfindung betrifft das Weiterleiten eines Anrufes an eines von mehreren Endgeräten (4-7) in einem Telekommunikationsnetz (1), das die mehreren Endgeräte (4-7) und wenigstens eine Vermittlungseinrichtung (2) miteinander verbindet. Dabei wird ein Anruf für ein Wählendgerät (6) in dem Telekommunikationsnetz (1) in Abhängigkeit von wenigstens einem in der wenigstens einen Vermittlungseinrichtung (2) abgespeicherten Vermittlungsparameter an ein Zielendgerät (7) in dem Telekommunikationsnetz (1) weitergeleitet.

Um eine Rufumleitung zu ermöglichen, bei der der Nutzer keine oder nur wenige, einfache Eingaben in einem der mehreren Telefongeräte machen muss, wird der wenigstens eine Vermittlungsparameter über eine Funkverbindung zwischen einer Mobilfunkeinheit (8) und einem Endgerät (7) in der wenigstens einen Vermittlungseinrichtung (2) abgespeichert.

## Beschreibung

Die Erfindung betrifft ein Verfahren zum Weiterleiten eines Anrufes an eines von mehreren Endgeräten in einem Telekommunikationsnetz, ein derartiges Telekommunikationsnetz, das mehrere Endgeräte und wenigstens eine Vermittlungseinrichtung miteinander verbindet, ein Endgerät und eine Mobilfunkeinheit für ein derartiges Telekommunikationsnetz.

Kommunikationsnetze und insbesondere Telekommunikationsanlagen verfügen über vielfältige Möglichkeiten, einen Ruf von einem Endgerät A (fest installiertes Teilnehmergerät A) zu einem Endgerät B (fest installiertes Teilnehmergerät B) auf ein weiteres Endgerät C (fest installiertes Teilnehmergerät C) umzuleiten. Hierbei können sowohl das rufende Endgerät A als auch das Rufumleitungsziel C Anschlüsse einer TK-Anlage oder eines privaten Netzes oder externe / öffentliche Anschlüsse sein.

Die Rufumleitung zu einem bestimmten Rufumleitungsziel lässt sich auf mehrere Arten einrichten: durch direkte Eingabe am umleitenden Endgerät B (Apparatefunktion), durch Einrichten am Rufumleitungsziel C im privaten Netz (bekannt als Follow Me), durch Einrichten am Rufumleitungsziel C im öffentlichen Netz (Remote Access) und durch Einrichten über Verwaltungsprogramme (anlagenintern oder Web-basiert).

Bei der direkten Eingabe am umleitenden Endgerät B aktiviert der Nutzer die Funktion 'Rufumleitungsziel einrichten' über eine Funktionstaste oder durch Wahl einer Kennziffer, und gibt anschließend die Rufnummer des Rufumleitungszieles (C) ein. Beim Einrichten am Rufumleitungsziel C im privaten Netz aktiviert der Nutzer die Funktion 'Follow Me' über eine Funktionstaste oder durch Wahl einer Kennziffer, und gibt anschließend die Rufnummer des umleitenden Endgerätes B ein (in der Regel seine eigene Durchwahlnummer). Dies geht nur, wenn das Rufumleitungsziel C innerhalb der TK-Anlage oder innerhalb des privaten Netzes liegt, dem diese TK-Anlage angehört.

Beim Einrichten am Rufumleitungsziel C im öffentlichen Netz (Remote Access) aktiviert der Nutzer die Rufumleitung z.B. durch die Wahl der Ziffernfolge: ZB KR DB PI RZ mit ZB = Zugangsnummer der Anlage, in der sich das Endgerät B befindet, KR = Kennziffer für'Rufumleitung einrichten', DB = Durchwahlnummer des Endgerätes B, PI = PIN (Personal Identification Number) und RZ = Rufumleitungsziel (C). Dies ist von jedem beliebigen wahlfähigen Endgerät ausführbar (analog, digital, Handy, ...), allerdings muss der Nutzer eine relativ lange Ziffernfolge eingeben.

Beim Einrichten über Verwaltungsprogramme (anlagenintern oder Web-basiert) wird zunächst der Rufumleitungsdatensatz der Rufnummer, die dem Endgerät B zugeordnet ist, selektiert. Darin wird dann als Rufumleitungsziel die Rufnummer des Endgerätes C eingegeben.

Die bekannten Verfahren zum Einrichten einer Rufumleitung haben folgende Nachteile: jedes Verfahren erfordert eine spezielle Vorgehensweise/Bedienung, die der Nutzer kennen muss; die Bedienung kann in allen drei o.g. Varianten unterschiedlich sein; bei der Eingabe des Rufumleitungsziels am umleitenden Endgerät B ist die Bedienung geräteabhängig, d.h. der Nutzer muss ggf. eine neue (andere) Bedienung erlernen, wenn er ein anderes Endgerät vor sich hat; bei der Eingabe am Rufumleitungsziel C (Follow Me) ist die Eingabeprozedur des Endgerätes C erforderlich, die je nach Gerät unterschiedlich ist; bei einem Rufumleitungsziel im öffentliche Netz (s.o. Variante 3) muss der Nutzer eine relativ lange Ziffernfolge eingeben und darf die einzelnen Kennziffern nicht vertauschen (Zugangscode, Anlage B, Kennziffer Rufumleitung, Durchwahlnummer B, PIN, Zielrufnummer); der Nutzer der Rufumleitung muss stets daran denken, die Rufumleitung einzurichten und wieder zurückzusetzen, da ihn sonst keine Anrufe erreichen, wenn er wieder an seinem Arbeitsplatz (Heimatrufnummer) ist.

Aus DE 692 28 164 T ist eine Kommunikationseinrichtung bekannt, die von einem Nutzer ständig bei sich getragen wird und die einem leitungsgebundenen oder drahtlosen Kommunikationsnetz den Aufenthaltsort des Nutzers anzeigt. Diese Angabe des Aufenthaltsortes wird von dem Kommunikationsnetz verwendet, um Sprach- und andere Daten an ein Gerät in dem Kommunikationsnetz umzuleiten. Als Folge wird in Abhängigkeit von dem Aufenthaltsort in dem Kommunikationsnetz eine Rufweiterleitung für den jeweiligen Nutzer eingerichtet.

Der Nachteil bei diesem Stand der Technik ist es, dass der Aufenthaltsort des Nutzers nur so genau bekannt sein kann, wie es die Funkeinrichtung für die Kommunikationseinrichtung zulässt. Mit anderen Worten, dem Kommunikationsnetz ist bekannt, dass sich die Kommunikationseinrichtung, die der Nutzer bei sich trägt, im Sendebereich der Funkeinrichtung des Netzes befindet. Wenn sich aber mehrere Endgeräte ebenfalls in dem Sendebereich der Funkeinrichtung des Netzes befinden, so ist nicht eindeutig geregelt, zu welchem der mehreren Endgeräte ein Ruf an den Nutzer weitergeleitet werden soll.

Es ist die Aufgabe der vorliegenden Erfindung, eine Rufumleitung zu ermöglichen, bei der der Nutzer keine oder nur wenige, einfache Eingaben in einem der mehreren Telefongeräte machen muss.

Diese Aufgabe wird gelöst durch das Verfahren nach Anspruch 1, das Telekommunikationsnetz nach Anspruch 8, das Endgerät nach Anspruch 11 und die Mobilfunkeinheit nach Anspruch 14. Bevorzugte Ausführungsformen der Erfindung sind Gegenstand der Unteransprüche.

Ein wesentlicher Aspekt der Erfindung ist es, mit Hilfe einer Mobilfunkeinheit, welche der Nutzer der Rufumleitung stets mit sich führt, die Rufumleitung vom Hauptanschluss des Nutzers auf das Endgerät einzurichten, in dessen Nähe sich der Nutzer befindet. Dazu ist jedes Endgerät mit einem Sender/Empfänger kurzer Reichweite ausgestattet, so dass eine Kommunikationsverbindung nur mit einer Mobilfunkeinheit zustande kommt, die sich in unmittelbarer Nähe zu dem Endgerät befindet. Damit ist die Zuordnung von Aufenthaltsort des Nutzers und Endgerät, das für Rufumleitungen genutzt werden kann, eindeutig.

Bei dem erfindungsgemäßen Verfahren zum Weiterleiten eines Anrufes an eines von mehreren Endgeräten in einem Telekommunikationsnetz, das die mehreren Endgeräte und wenigstens eine Vermittlungseinrichtung miteinander verbindet, wobei ein Anruf für ein Wählendgerät in dem Telekommunikationsnetz in Abhängigkeit von wenigstens einem in der wenigstens einen Vermittlungseinrichtung abgespeicherten Vermittlungsparameter an ein Zielendgerät in dem Telekommunikationsnetz weitergeleitet wird, wird der wenigstens eine Vermittlungsparameter über eine Funkverbindung zwischen einer Mobilfunkeinheit und einem Endgerät in der wenigstens einen Vermittlungseinrichtung abgespeichert.

Das erfindungsgemäße Telekommunikationsnetz, das mehrere Endgeräte und wenigstens eine Vermittlungseinrichtung miteinander verbindet, bei dem ein Anruf für ein Wählendgerät in dem Telekommunikationsnetz in Abhängigkeit von wenigstens einem in der wenigstens einen Vermittlungseinrichtung abgespeicherten Vermittlungsparameter an ein Zielendgerät in dem Telekommunikationsnetz weitergeleitet wird, weist eine Funkverbindung zwischen einer Mobilfunkeinheit und einem der mehreren Endgeräte zum Abspeichern des wenigstens einen Vermittlungsparameters in der wenigstens einen Vermittlungseinrichtung auf.

Das erfindungsgemäße Endgerät für ein Telekommunikationsnetz, bei dem u.a. ein Weiterleiten eines Anrufes an eines von mehreren Endgeräten in dem Telekommunikationsnetz, das die mehreren Endgeräte und wenigstens eine Vermittlungseinrichtung miteinander verbindet, möglich ist, wobei ein Anruf für ein Wählendgerät in dem Telekommunikationsnetz in Abhängigkeit von wenigstens einem in der wenigstens einen Vermittlungseinrichtung abgespeicherten Vermittlungsparameter an ein Zielendgerät weitergeleitet wird, weist einen Empfänger zum Empfangen von Kennungsdaten von einer Mobilfunkeinheit über eine Funkverbindung und einen Schnittstellenschaltkreis für das Übermitteln der Kennungsdaten von der Mobilfunkeinheit und/oder von Endgerätedaten von dem Endgerät an die wenigstens eine Vermittlungseinrichtung in dem Telekommunikationsnetz auf.

Die erfindungsgemäße Mobilfunkeinheit für ein Telekommunikationsnetz, bei dem u.a. ein Weiterleiten eines Anrufes an eines von mehreren Endgeräten in dem Telekommunikationsnetz, das die mehreren Endgeräte und wenigstens eine Vermittlungseinrichtung miteinander verbindet, möglich ist, wobei ein Anruf für ein Wählendgerät in dem Telekommunikationsnetz in Abhängigkeit von wenigstens einem in der wenigstens einen Vermittlungseinrichtung abgespeicherten Vermittlungsparameter an ein Zielendgerät weitergeleitet wird, weist einen Kennungsdatenspeicher zum Speichern von Kennungsdaten der Mobilfunkeinheit und eine Sendevorrichtung zum Senden der Kennungsdaten an eines der mehreren Endgeräte auf.

Besondere Ausführungsformen der Erfindung weisen eines oder mehrere der folgenden Merkmale ausschließlich oder in Kombination miteinander auf:
der wenigstens eine Vermittlungsparameter wird über das Zielendgerät in der wenigstens einen Vermittlungseinrichtung abgespeichert;
ein erster Vermittlungsparameter entspricht der Rufnummer des Zielendgerätes und vorzugsweise entspricht ein zweiter Vermittlungsparameter der Rufnummer eines der Mobilfunkeinheit zugeordneten Endgerätes in dem Telekommunikationsnetz;
der wenigstens eine Vermittlungsparameter wird in der wenigstens einen Vermittlungseinrichtung abgespeichert, wenn eine Taste der Mobilfunkeinrichtung und/oder eines Endgerätes, mit dem die Funkverbindung besteht, betätigt wird (aktives Einrichten);
der wenigstens eine Vermittlungsparameter wird in der wenigstens einen Vermittlungseinrichtung automatisch abgespeichert, wenn die Funkverbindung zwischen der Mobilfunkeinheit und einem Endgerät aufgebaut worden ist (passives Einrichten);
der wenigstens eine Vermittlungsparameter wird über das Telekommunikationsnetz von dem Zielendgerät in der wenigstens einen Vermittlungseinrichtung abgespeichert;
der wenigstens eine Vermittlungsparameter wird über eine TCP/IP-Verbindung von dem Zielendgerät in der wenigstens einen Vermittlungseinrichtung abgespeichert;
die Funkverbindung hat eine maximale Reichweite in der Größenordnung von 10m;
die Funkverbindung ist eine Bluetooth-Funkverbindung;
der Empfänger des Endgerätes ist ein Bluetooth-Empfänger;
das Endgerät weist einen Versorgungsschaltkreis für die drahtlose Energieversorgung eines Transponders in der Mobilfunkeinheit auf;
die Sendevorrichtung ist eine Bluetooth-Sendevorrichtung;
die Mobilfunkeinheit ist ein Transponder.

Bei einer besonders bevorzugten Ausführungsform der Erfindung können von dem Benutzer des einen der Mobilfunkeinheit zugeordneten Endgerätes gesetzte Einstellungen an das Zielendgerät übertragen werden, wenigstens teilweise, d.h. soweit die Hardware-Kompatibilität der beiden Geräte dies zulässt.

In der obigen Zusammenfassung der Erfindung und in der folgenden Beschreibung von Ausführungsbeispielen ist unter einem "Endgerät" ein Gerät zu verstehen, das sich als Telefon in einem Telekommunikationsnetz eignet, bzw. ein Gerät, das zusätzlich Datenverarbeitung zulässt oder mit einem stationären Rechner (Tischrechner, PC) bzw. einem tragbaren Rechner ("Laptop" etc.) verbunden ist. Bei der Möglichkeit der Datenverarbeitung bzw. Verbindung mit einem Rechner sind neben der Verbindung des Endgerätes mit dem Telekommunikationsnetz auch weitere Verbindungen möglich, wie z.B. eine TCP/IP-Verbindung (LAN, Intranet, Internet etc.), über die der oder die Vermittlungsparameter in der wenigstens einen Vermittlungseinrichtung gesetzt werden kann bzw. können.

Weitere Merkmale und Vorteile der Erfindung ergeben sich aus der folgenden Beschreibung von bevorzugten Ausführungsbeispielen, bei der Bezug genommen wird auf die beigefügten Figuren.

Fig. 1 zeigt schematisch ein Telekommunikationsnetz mit dem für die Umsetzung der Erfindung relevanten Elementen nach dem Stand der Technik.

Fig. 2A und 2B zeigen jeweils eine erste Ausführungsform des erfindungsgemäßen Endgerätes bzw. der erfindungsgemäßen Mobilfunkeinheit.

Fig. 3A und 3B zeigen jeweils eine zweite Ausführungsform des erfindungsgemäßen Endgerätes bzw. der erfindungsgemäßen Mobilfunkeinheit.

Fig. 4 zeigt ein Flussdiagramm für eine Ausführungsform des erfindungsgemäßen Verfahrens.

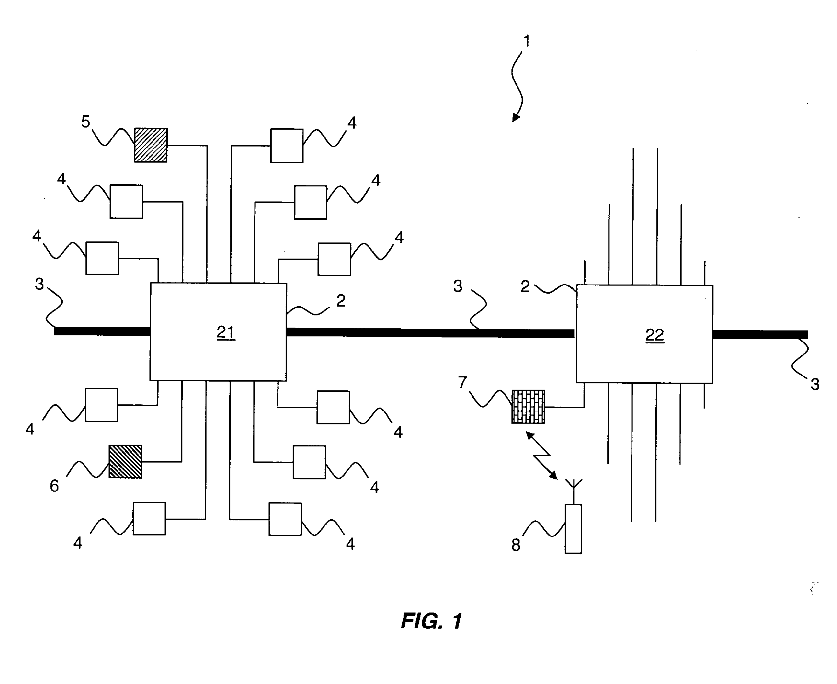

In Fig. 1 ist ein Telekommunikationsnetz 1 schematisch gezeigt, das als Hauptelemente mehrere Vermittlungseinrichtungen 2 umfasst, die durch eine oder mehrere Hauptleitungen 3 für die Übertragung von Telekommunikations-Nachrichten dienen. Mit jeder der Vermittlungseinrichtungen 2 sind mehrere Endgeräte 4 verbunden, über die ein Anwender einen Anruf für ein anderes Endgerät tätigen oder einen Anruf von einem anderen Endgerät jeweils entgegennehmen kann.

Im folgenden wird angenommen, dass ein Anruf von einem Anruferendgerät 5 an einer Vermittlungseinrichtung "21" in dem Telekommunikationsnetz 1 an ein anderes Endgerät getätigt wird, das an der Vermittlungseinrichtung "21" hängt. Die Erfindung ist sowohl auf Anrufe anwendbar, die über mehrere Vermittlungseinrichtungen "21" und "22" durchgeschaltet werden, als auch auf Anrufe innerhalb eines lokalen Netzes.

Das von dem Anruferendgerät 5 aus angerufene Endgerät 6 wird im folgenden als gewähltes Endgerät oder Wählgerät bezeichnet. Befindet sich der gewünschte Gesprächspartner an seinem Arbeitsplatz, d.h. in der Nähe seines "Heimatgerätes", so erreicht ihn der Anruf direkt. Anders im Fall einer Abwesenheit des Endgerätebesitzers 6. In diesem Fall soll der Anruf beispielsweise an ein Zielgerät 7 an der Vermittlungseinrichtung "22" weitergeleitet werden, die nicht die gleiche wie die des Heimatgerätes ist, nämlich "21". Dies erfolgt in Abhängigkeit von einem Verbindungsparameter, der beim Stand der Technik wie oben beschrieben manuell über ein Endgerät 4 in der Vermittlungseinrichtung 2 abgespeichert werden kann.

Der bzw. die Vermittlungsparameter umfassen dabei i.a. die Rufnummer des Wählendgerätes in dem Telekommunikationsnetz sowie die Rufnummer des Zielendgerätes in dem Telekommunikationsnetz.

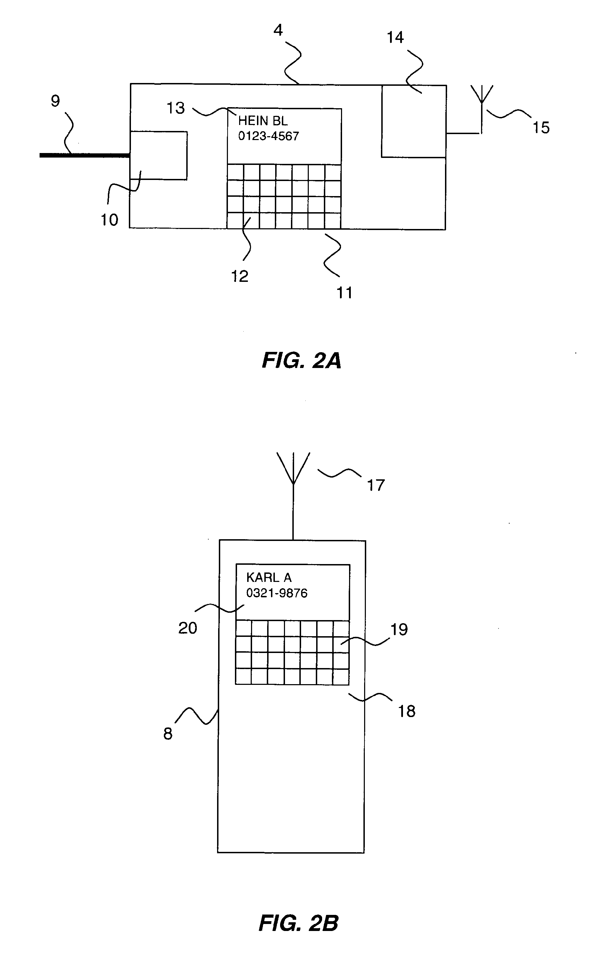

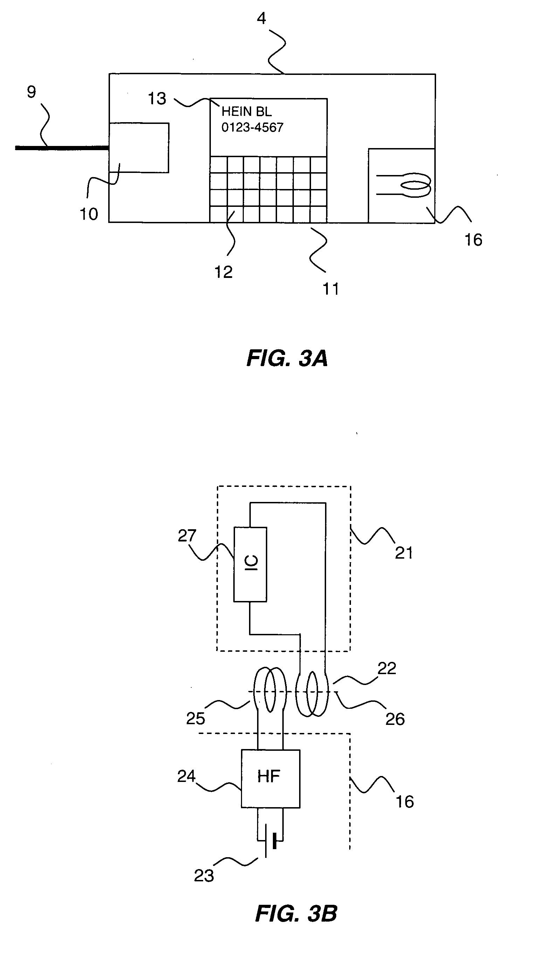

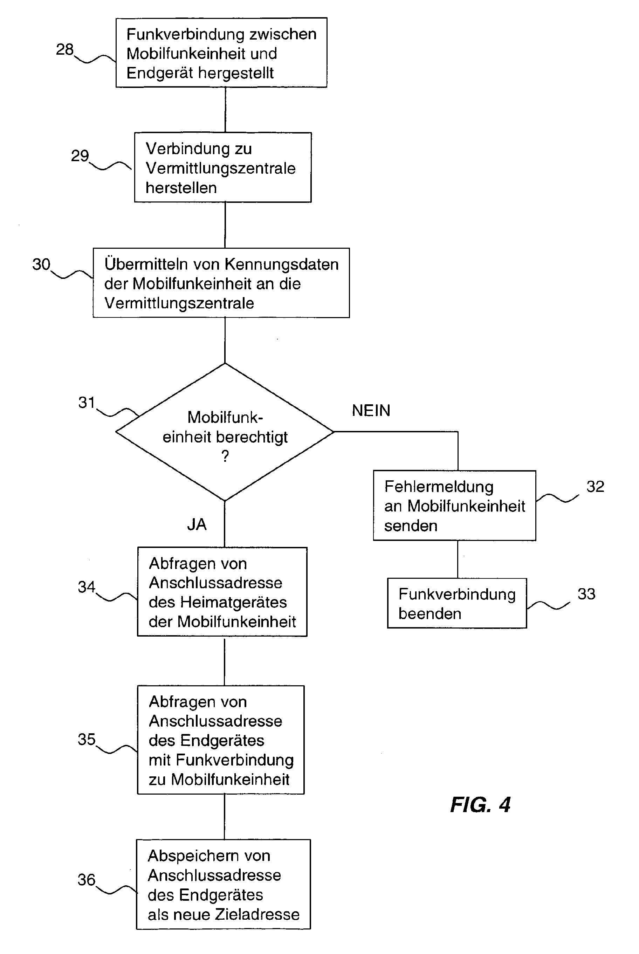

Erfindungsgemäß wird die aufwendige manuelle Eingabe über ein Endgerät dadurch ersetzt, dass der Besitzer des Endgerätes 6 eine Mobilfunkeinheit 8 mit sich führt, über die er von jedem beliebigen Ort aus über ein in der Nähe befindliches Endgerät der Verbindungszentrale 2 das Endgerät mitteilt, zu dem Anrufe für ihn weitergeschaltet werden sollen. Die Vermittlungsparameter werden erfindungsgemäß also über eine Funkverbindung zwischen einer Mobilfunkeinheit 8 und einem Endgerät in der wenigstens einen Vermittlungseinrichtung 2 abgespeichert. Dazu wird in einer bevorzugten Ausführungsform der Erfindung eine Funkverbindung zwischen der Mobilfunkeinheit 8 und einem der Endgeräte 4 hergestellt, über die grundsätzlich Informationen übermittelt werden, mit denen sich die Heimatadresse des Besitzers ermitteln lässt. Die Heimatadresse ist die Adresse desjenigen Endgerätes, dem die Mobilfunkeinheit 8 zugeordnet ist. In dem obigen Fall ist diese Adresse die Adresse des Anschlusses von Gerät 6. Darüber hinaus kann ein Anschluss übermittelt werden, zu dem der Anruf weitergeschaltet werden soll. In der Regel ist das der Anschluss desjenigen Endgerätes, mit dem die Funkverbindung besteht. Wird die Anschlusskennung nicht übertragen, so überträgt das Endgerät, mit dem die Funkverbindung besteht, seine eigene Kennung zur Vermittlungseinrichtung 2. Die einzelnen Schritte dieses Verfahrens werden in Zusammenhang mit Fig. 4 erläutert. Die Vorrichtungen, die für die Umsetzung der Erfindung benötigt werden, werden im folgenden anhand von in Fig. 2A, 2B, 3A und 3B dargestellten bevorzugten Ausführungsformen erläutert.

In Fig. 2A ist ein Endgerät 4 gezeigt, das über eine Anschlussleitung 9 mit der Vermittlungseinrichtung 2 verbunden ist. Die Kommunikation zwischen der Vermittlungseinrichtung und dem Endgerät 4 erfolgt über einen Schnittstellenschaltkreis 10, auf den später noch eingegangen wird. Außerdem umfasst das Endgerät 4 eine Tastatur 11 mit Tasten 12 für die Eingabe u.a. einer Anschlusskennung, um eine Gesprächsverbindung mit einem anderen Endgerät in dem Telekommunikationsnetz 1 aufzubauen. Auf einer Anzeigeeinheit 13 werden die eingegebenen Ziffern und zusätzliche Informationen wie in einem elektronischen Adressbuch abgespeicherten Personen mit Namen und Anschlussnummer angezeigt.

Erfindungsgemäß umfasst ein Endgerät 4 außerdem einen Empfänger 14 mit einer Antenne 15 für den Aufbau einer Funkverbindung mit einer Mobilfunkeinheit 8.

Eine entsprechende Ausführungsform der erfindungsgemäßen Mobilfunkeinheit 8 ist in Fig. 2B gezeigt. Wie das Endgerät nach Fig. 2A umfasst auch diese Mobilfunkeinheit 8 eine Tastatur 18 mit Tasten 19 sowie eine Anzeigeeinheit 20 für die Anzeige von Anschlusskennungen und abgespeicherten Adressangaben. Die Tastatur 18 sowie die Anzeigeeinheit 20 sind dabei jedoch nur dann erforderlich, wenn der Anwender aktiv das oben beschriebene Verfahren auslösen soll; bei einer automatischen Einrichtung der Weiterleitung (z.B. bei Herstellung des Funkkontaktes zwischen Mobilfunkeinheit und Endgerät) sind diese Einrichtungen nicht erforderlich. Die Funkverbindung wird seitens der Mobilfunkeinheit 8 über die Antenne 17 hergestellt.

Gelangt die Mobilfunkeinheit 8 in die Nähe des mit dem Empfänger 14 ausgestatteten Endgerätes 4, so wird die Funkverbindung in der Ausführungsform nach Fig. 2A, 2B automatisch aufgebaut. Um die Vermittlungsparameter nun in der Vermittlungseinrichtung 2 neu zu setzen oder an die Vermittlungseinrichtung 2 zu übermitteln, damit sie dort abgespeichert werden, drückt der Anwender eine Taste 12 des Endgerätes 4 oder eine Taste 19 der Mobilfunkeinrichtung. Dadurch werden die Schritte aufgerufen, die weiter unten mit Bezug auf Fig. 4 erläutert werden (aktives Einrichten des Verbindungsparameters).

In einer alternativen Ausführungsform können die Vermittlungsparameter in der Vermittlungseinrichtung 2 auch automatisch, d.h. ohne Betätigung einer Taste, neu gesetzt werden, sobald die Funkverbindung zwischen der Mobilfunkeinheit 8 und dem Endgerät 7 besteht (passives Einrichten der Verbindungsparameter).

Damit die Mobilfunkeinheit 8 immer nur zu einem eindeutig bestimmten Endgerät 7 eine Funkverbindung aufbauen kann, ist die Sende- und Empfangsleistung vorzugsweise jeweils derart beschränkt, dass die Funkverbindung eine maximale Reichweite in der Größenordnung von 10m hat.

Bei der Ausführungsform nach Fig. 2A und 2B ist die Funkverbindung vorzugsweise eine Bluetooth-Funkverbindung. Als Mobilfunkeinheit kann aber ebenso gut ein Pager verwendet werden.

Eine weitere Ausführungsform des erfindungsgemäßen Endgerätes 4 ist in Fig. 3A gezeigt. Das Endgerät nach Fig. 3A hat im wesentlichen die gleichen Elemente wie das Endgerät nach Fig. 2A, die auch soweit gleich bezeichnet sind. Anstelle des Empfängers 14 weist das Gerät nach Fig. 3A jedoch einen integrierten Versorgungs- und Empfängerschaltkreis 16 auf. Über ihn lässt sich, wie in Zusammenhang mit Fig. 3B erläutert wird, eine drahtlose Verbindung mit einer Mobilfunkeinheit mit einem Transponder 21 herstellen, über die der Transponder 21 sowohl mit elektrischer Energie versorgt wird als auch ein Datenaustausch erfolgt.

In Fig. 3B ist die integrierte Versorgungs- und Empfängerschaltung 16 aus dem Endgerät 4 mit weiteren Einzelheiten gezeigt. Die Schaltung 16 ist mit einer Stromversorgung 23 verbunden bzw. mit einer autonomen Stromversorgung 23 ausgestattet. Eine HF-Einrichtung 24 erzeugt ein elektromagnetisches Wechselfeld, das über eine Antennenspule 25 abgestrahlt wird. Wenn sich eine entsprechende Antennenspule 22 des Transponders 21 in der Nähe befindet, möglichst mit der Antennenspule 25 entlang einer Ausrichtungsachse 26 ausgerichtet, so wird in dem Transponder 21 ein integrierter Schaltkreis IC 27 mit elektrischer Leistung versorgt und sendet - möglichst auf einer anderen Frequenz als derjenigen der HF-Einrichtung 24 - Kennungsdaten aus, die den Transponder 21 eindeutig in dem Telekommunikationsnetz 1 identifizieren.

Die beiden Ausführungsformen nach Fig. 2A und 2B bzw. 3A und 3B haben jeweils spezifische Vor- und Nachteile. Die Vorteile der Bluetooth-Lösung gegenüber der Transponder-Lösung bestehen darin, dass relativ viele Endgeräte und PCs bereits heute über eine Bluetooth-Schnittstelle verfügen (als Leseeinheit zu verwenden). Dies wird sich in den nächsten Jahren noch verstärken. Die Reichweite einer Bluetooth-Verbindung ist derzeit höher als bei Transpondern (10m bis 100m). Ferner können bei Bluetooth die installierten Dienste eines anderen Gerätes innerhalb der Reichweite ermittelt werden und Dienste zur Identifikation und Verschlüsselung genutzt werden.

Allerdings ist bei der Bluetooth-Verbindung anders als bei der Transponder-Verbindung eine eigene Stromversorgung notwendig (die allerdings bei geringer Reichweite einen sehr geringen Verbrauch hat), und außerdem ist die Bauform eines Bluetooth-Empfängers etwas größer.

Das Verfahren für die erfindungsgemäße Weiterleitung an ein Endgerät in dem Telekommunikationsnetz 1 lässt sich in einer bevorzugten Ausführungsform wie in Fig. 4 darstellen. Nach der Herstellung einer Funkverbindung zwischen der Mobilfunkeinheit 8 und einem gewünschten Zielendgerät 7 in Schritt 28 wird in Schritt 29 von dem Endgerät eine Verbindung zu der Vermittlungseinrichtung 2 aufgebaut. Anhand der Kennungsdaten der Mobilfunkeinheit 8 wird in Schritt 30 die Berechtigung der Mobilfunkeinheit 8 überprüft. Ist die Mobilfunkeinheit 8 nicht berechtigt zu einem Zugriff auf (nicht dargestellte) Speicher in der Vermittlungseinrichtung 2, so wird in Schritt 32 eine Warnung an die Mobilfunkeinheit 8 und das jeweilige Endgerät 7 ausgegeben, bevor die Verbindung zu der Mobilfunkeinheit 8 in Schritt 33 abgebaut wird.

Wird in Schritt 31 dagegen festgestellt, dass die Mobilfunkeinheit 8 zum Zugriff auf die Vermittlungseinrichtung 2 berechtigt ist, so wird in Schritt 34 die Anschlussadresse des Heimatgerätes der Mobilfunkeinheit abgefragt. Dabei kann diese Adresse beispielsweise des Gerätes 6 in Fig. 1 von der Mobilfunkeinheit 8 explizit übertragen werden, sie kann sich anhand einer Tabelle in der Vermittlungseinrichtung 2 aus den Kennungsdaten der Mobilfunkeinheit (Schritt 30) ergeben, oder die Adresse des Heimatgerätes 6 kann identisch sein mit den Kennungsdaten der Mobilfunkeinheit 8. Dabei ist unter Heimatendgerät 6 das Endgerät zu verstehen, unter dessen Rufnummer der Nutzer normalerweise erreichbar ist. Es kann sich hierbei aber auch um einen virtuellen Anschluss mit einer dem Nutzer zugeordneten zentralen Rufnummer handeln (z.B. Universal Communication Identifier), welche stets eine Rufumleitung auf ein reales Endgerät hat.

In Schritt 35 wird die Anschlussadresse desjenigen Endgerätes abgefragt, zu der Anrufe für die Heimatadresse der Mobilfunkeinheit 8 umgeleitet werden sollen. In der Regel ist dies die Anschlussadresse desjenigen Endgerätes 7, zu dem die Funkverbindung von der Mobilfunkeinheit 8 besteht.

In Schritt 36 wird schließlich diese Adresse als (neue) Zieladresse in einer (nicht dargestellten) Tabelle in der Vermittlungseinrichtung 2 an einer durch die Kennungsdaten der Mobilfunkeinheit referenzierten Stelle abgespeichert. Alle Anrufe an die Heimatadresse der Mobilfunkeinheit 8 werden ab jetzt von der Vermittlungseinrichtung 2 an die neue Zieladresse weitergeleitet.

Insgesamt werden somit an die Vermittlungseinrichtung die Identifizierungsdaten der Mobilfunkeinrichtung und des Zielendgerätes übermittelt. Darüber hinaus müssen keine weiteren Daten übertragen werden, wenn von der jeweiligen Vermittlungseinrichtung "21" oder "22" die Mobilfunkeinrichtung mittels einer (nicht dargestellten) Zuordnungstabelle eindeutig einem Heimatendgerät zugeordnet werden kann. Andernfalls muss von der Mobilfunkeinrichtung auch die Rufnummer des Heimatendgerätes in dem Telekommunikationsnetz sowie gegebenenfalls die Rufnummer des Zielendgerätes in dem Telekommunikationsnetz übermittelt werden. Die Schritte werden in für den Fachmann offensichtlicher Art und Weise durch die Vermittlungseinrichtung 2, das Endgerät 7 und die Mobilfunkeinheit 8 ausgeführt. Die Übermittlung der relevanten Daten zwischen den beteiligten Geräten erfolgt dabei wie bereits angedeutet über das Telekommunikationsnetz 1 (durch die jeweils übliche Wähl- bzw. Signalisierungsprozedur in dem Netz) oder über eine alternative Verbindung, wie z.B. eine TCP/IP-Verbindung, d.h. ein (W-) LAN, Intranet, Internet oder andere.

Auch wenn grundsätzlich über die oben genannten Daten weitere Daten nicht ausgetauscht werden müssen, so lässt sich das Prinzip der Erfindung jedoch erweitern, z.B. indem die persönliche Einstellung des Heimatgerätes durch den Benutzer an das neue Zielendgerät übertragen wird. Mit anderen Worten, es können von dem Benutzer des Endgerätes, das der Mobilfunkeinheit zugeordnet ist, dessen gesetzte Einstellungen an das Zielendgerät übertragen werden. Dies ist natürlich abhängig von der Hardware-Kompatibilität der beiden Geräte.

### Bezugszeichen

- 1: Telekommunikationsnetz
- 2: Vermittlungszentrale
- 3: Hauptleitung
- 4: Endgerät
- 5: Anruferendgerät
- 6: Wählendgerät
- 7: Zielendgerät
- 8: Mobilfunkeinheit
- 9: Anschlussleitung von Endgerät
- 10: Schnittstellenschaltung
- 11: Tastatur von Endgerät
- 12: Taste der Endgerätetastatur
- 13: Anzeigeeinheit von Endgerät
- 14: Empfänger in Endgerät
- 15: Empfängerantenne
- 16: integrierter Versorgungs- und Empfängerschaltkreis in Endgerät für Transponder
- 17: Antenne von Mobilfunkeinheit
- 18: Tastatur von Mobilfunkeinheit
- 19: Taste auf Mobilfunktastatur
- 20: Anzeigeeinheit von Mobilfunkeinheit
- 21: Transponder
- 22: Versorgungs- und Sendespule von Transponder
- 23: Stromversorgung von Endgerät
- 24: HF-Aufbereitung für Transponderversorgung
- 25: Versorgungs- und Empfangsspule von Endgerät
- 26: Ausrichtungsachse von Versorgungs- und Sende-/Empfangsspulen
- 27: Transponder-IC mit Kennungsdaten
- 28: Herstellung von Funkverbindung
- 29: Herstellung von Verbindung zu Vermittlungszentrale
- 30: Übermitteln der Kennungsdaten der Mobilfunkeinheit
- 31: Berechtigungsabfrage
- 32: Fehlermeldung
- 33: Verbindungsbeendigung
- 34: Laden der Heimatgeräteanschlusskennung
- 35: Laden der Endgerätekennung mit Funkverbindung zu Mobilfunkeinheit
- 36: Abspeichern der Anschlusskennung des Endgerätes als neue Zieladresse

## Patentansprüche

1. Verfahren zum Weiterleiten eines Anrufes an eines von mehreren Endgeräten (4, 5, 6, 7) in einem Telekommunikationsnetz (1), das die mehreren Endgeräte (4, 5, 6, 7) und wenigstens eine Vermittlungseinrichtung (2) miteinander verbindet,
wobei ein Anruf für ein Wählendgerät (6) in dem Telekommunikationsnetz (1) in Abhängigkeit von wenigstens einem in der wenigstens einen Vermittlungseinrichtung (2) abgespeicherten Vermittlungsparameter an ein Zielendgerät (7) in dem Telekommunikationsnetz (1) weitergeleitet wird,
**dadurch gekennzeichnet, dass**
der wenigstens eine Vermittlungsparameter über eine Funkverbindung zwischen einer Mobilfunkeinheit (8) und einem Endgerät (7) in der wenigstens einen Vermittlungseinrichtung (2) abgespeichert wird.

2. Verfahren nach Anspruch 1,
**dadurch gekennzeichnet, dass**
der wenigstens eine Vermittlungsparameter über das Zielendgerät (7) in der wenigstens einen Vermittlungseinrichtung (2) abgespeichert wird.

3. Verfahren nach Anspruch 1 oder 2,
bei dem ein erster Vermittlungsparameter der Rufnummer des Zielendgerätes (7) entspricht und bei dem vorzugsweise ein zweiter Vermittlungsparameter der Rufnummer eines der Mobilfunkeinheit (8) zugeordneten Endgerätes in dem Telekommunikationsnetz (1) entspricht.

4. Verfahren nach einem der Ansprüche 1 bis 3,
bei dem der wenigstens eine Vermittlungsparameter in der wenigstens einen Vermittlungseinrichtung (2) abgespeichert wird, wenn eine Taste (12; 19) der Mobilfunkeinrichtung und/oder eines Endgerätes (4, 5, 6, 7), mit dem die Funkverbindung besteht, betätigt wird.

5. Verfahren nach einem der Ansprüche 1 bis 3,
bei dem der wenigstens eine Vermittlungsparameter in der wenigstens einen Vermittlungseinrichtung (2) automatisch abgespeichert wird, wenn die Funkverbindung zwischen der Mobilfunkeinheit (8) und einem Endgerät (4, 5, 6, 7) aufgebaut worden ist.

6. Verfahren nach einem der vorangehenden Ansprüche,
**dadurch gekennzeichnet, dass**
der wenigstens eine Vermittlungsparameter über das Telekommunikationsnetz (1) von dem Zielendgerät (7) in der wenigstens einen Vermittlungseinrichtung (2) abgespeichert wird.

7. Verfahren nach einem der Ansprüche 1 bis 5,
**dadurch gekennzeichnet, dass**
der wenigstens eine Vermittlungsparameter über eine TCP/IP-Verbindung von dem Zielendgerät (7) in der wenigstens einen Vermittlungseinrichtung (2) abgespeichert wird.

8. Telekommunikationsnetz (1), das mehrere Endgeräte (4, 5, 6, 7) und wenigstens eine Vermittlungseinrichtung (2) miteinander verbindet, bei dem ein Anruf für ein Wählendgerät (6) in dem Telekommunikationsnetz (1) in Abhängigkeit von wenigstens einem in der wenigstens einen Vermittlungseinrichtung (2) abgespeicherten Vermittlungsparameter an ein Zielendgerät (7) in dem Telekommunikationsnetz (1) weitergeleitet wird,
**gekennzeichnet durch**
eine Funkverbindung zwischen einer Mobilfunkeinheit (8) und einem der mehreren Endgeräte (4, 5, 6, 7) zum Abspeichern des wenigstens einen Vermittlungsparameters in der wenigstens einen Vermittlungseinrichtung (2).

9. Telekommunikationsnetz nach Anspruch 8,
bei dem die Funkverbindung eine maximale Reichweite in der Größenordnung von 10m hat.

10. Telekommunikationsnetz nach Anspruch 8 oder 9,
bei dem die Funkverbindung eine Bluetooth-Funkverbindung ist.

11. Endgerät (4, 5, 6, 7) für ein Telekommunikationsnetz (1), bei dem u.a. ein Weiterleiten eines Anrufes an eines von mehreren Endgeräten (4, 5, 6, 7) in dem Telekommunikationsnetz (1), das die mehreren Endgeräte und wenigstens eine Vermittlungseinrichtung (2) miteinander verbindet, möglich ist,
wobei ein Anruf für ein Wählendgerät (6) in dem Telekommunikationsnetz (1) in Abhängigkeit von wenigstens einem in der wenigstens einen Vermittlungseinrichtung (2) abgespeicherten Vermittlungsparameter an ein Zielendgerät (7) weitergeleitet wird,
**gekennzeichnet durch**
einen Empfänger (14) zum Empfangen von Kennungsdaten von einer Mobilfunkeinheit (8) über eine Funkverbindung und
einen Schnittstellenschaltkreis (10) für das Übermitteln der Kennungsdaten von der Mobilfunkeinheit (8) und/oder von Endgerätedaten von dem Endgerät (4, 5, 6, 7) an die wenigstens eine Vermittlungseinrichtung (2) in dem Telekommunikationsnetz (1).

12. Endgerät nach Anspruch 11,
**dadurch gekennzeichnet, dass**
der Empfänger (14) ein Bluetooth-Empfänger ist.

13. Endgerät nach Anspruch 11,
**gekennzeichnet durch**
einen Versorgungsschaltkreis (16) für die drahtlose Energieversorgung eines Transponders in der Mobilfunkeinheit (21).

14. Mobilfunkeinheit (8; 21) für ein Telekommunikationsnetz (1), bei dem ein Weiterleiten eines Anrufes an eines von mehreren Endgeräten (4, 5, 6, 7) in dem Telekommunikationsnetz, das die mehreren Endgeräte und wenigstens eine Vermittlungseinrichtung (2) miteinander verbindet, möglich ist,
wobei ein Anruf für ein Wählendgerät (6) in dem Telekommunikationsnetz (1) in Abhängigkeit von wenigstens einem in der wenigstens einen Vermittlungseinrichtung (2) abgespeicherten Vermittlungsparameter an ein Zielendgerät (7) weitergeleitet wird,
**gekennzeichnet durch**
einen Kennungsdatenspeicher (27) zum Speichern von Kennungsdaten der Mobilfunkeinheit (8; 21) und
eine Sendevorrichtung zum Senden der Kennungsdaten an eines der mehreren Endgeräte (4, 5, 6, 7).

15. Mobilfunkeinheit nach Anspruch 14,
**dadurch gekennzeichnet, dass**
die Mobilfunkeinheit (21) eine Bluetooth-Mobilfunkeinheit ist.

16. Mobilfunkeinheit nach Anspruch 14,
**dadurch gekennzeichnet, dass**
die Mobilfunkeinheit (21) ein Transponder ist.

17. Verfahren nach einem der Ansprüche 1 bis 7,
**dadurch gekennzeichnet, dass**
Einstellungen des einen der Mobilfunkeinheit (8) zugeordneten Endgerätes (6) an das Zielendgerät (7) wenigstens teilweise übertragen werden.
